# EUROPEAN PATENT APPLICATION

(11) **EP 1 225 436 A2**
(43) Date of publication of application: **24.07.2002**
(21) Application number: 02000541.9
(22) Date of filing: 09.01.2002
(51) Int. Cl.: G01N 1/22

(54) **An aerosol particle collection device and method of collecting aerosol particles**

(30) Priority: 18.01.2001 GB 0101325; 02.02.2001 GB 0102710
(71) Applicant: Gorbunov, Boris Zachar, Canterbury, Kent, CT1 1QH (GB); Priest, Nicholas Derham, Oxfordshire SN7 8QQ (GB)
(72) Inventor: Gorbunov, Boris Zachar, Canterbury, Kent, CT1 1QH (GB); Priest, Nicholas Derham, Oxfordshire SN7 8QQ (GB)
(74) Representative: Hoarton, Lloyd Douglas Charles

(57) **Abstract**

An aerosol particle collection device (1) for collecting aerosol particles suspended in a fluid, the device comprising: a rotatable element (4) having a collecting surface (5) which, during rotation of the element, passes through the fluid containing the aerosol suspension.

## Description

THIS INVENTION RELATES to an aerosol particle collection or sampling device and to a method of collecting aerosol particles.

Sampling aerosols is an important stage in air quality monitoring and assessment. The simplest means of collecting aerosols suspended in a fluid (typically air) for sampling is by way of a non-size selective sampler comprising a pump, a flow control system and a filter. However, samplers with filters do not allow any measurement of size distribution of the aerosol particles to be taken. Another conventional method of aerosol particle collection is by way of a cascade impactor which relies upon inertial deposition of particles onto substrates. Aerosols are entrained in a fluid flow through the cascade impactor until the fluid flow changes its direction from normal to parallel to the substrate. Larger aerosol particles having greater inertia cannot follow the new direction of fluid flow and impact on the substrate surface. Smaller aerosol particles with less inertia follow the fluid flow along the change of direction until the next stage where there is a further change in direction of the fluid flow. Each stage of the cascade impactor is characterised by the critical aerodynamic size of aerosol particles deposited at that stage. Some size distribution measurement is therefore possible using such cascaded impactors but the measurements of size distribution are constrained by the number of stages which can be employed.

Typical cascade impactors have a fluid flow rate of 1 to 20 litres per minute which is insufficient flow rate for meaningful samples to be taken over a short period of time. Thus, it is sometimes necessary when using cascade impactors to have a sampling period of from twenty-four hours to one or two weeks. Cascade impactors are also prone to contamination from foreign bodies entrained into the airflow through the cascade impactor. Larger cascade impactors are available which offer much higher flow rates in the order of cubic metres per minute but these are extremely large and expensive devices. Cascade impactors are also susceptible to changes in ambient conditions such as wind changes and the like which can have a significant impact on sampling results.

It is an object of the present invention to provide an aerosol particle collection device which does not suffer from the above mentioned problems and which can preferably also provide samples indicative of the size distributions of collected aerosol particles.

Accordingly, one aspect of the present invention provides an aerosol particle collection device for collecting aerosol particles suspended in a fluid, the device comprising: a rotatable element having a collecting surface which, during rotation of the element, passes through the fluid containing the aerosol suspension.

Preferably, the rotatable element has an axis of rotation such that a portion of the collecting surface remote from the axis of rotation has a higher relative velocity through the fluid than a portion of the collecting surface proximal the axis of rotation.

Conveniently, two or more discrete collecting surfaces are provided along the rotatable element.

Advantageously, a single collecting surface extends along the rotatable element.

Preferably, the collecting surface is substantially normal to the direction of rotation of the rotatable element.

Conveniently, the collecting surface is substantially planar.

Advantageously, the collecting surface is substantially concave or convex in profile.

Preferably, a fluid mover is provided to direct a flow of fluid substantially parallel to the axis of rotation of the rotatable element such that the collecting surface moves through successive unsampled volumes of fluid.

Conveniently, the fluid mover is a fan.

Advantageously, the speed of a portion of the rotatable element is selected to be substantially greater than any ambient fluid flow rate.

Preferably, the larger aerosol particles are collected remote from the axis of rotation and smaller particles are collected adjacent the axis of rotation of the rotatable element thereby creating a size selective deposit along the rotatable element..

Conveniently, the collecting surface of the arm is provided with means to retain impacted particles.

Advantageously, the retention means comprises one or a plurality of the following: a film, a foil, a layer of grease, an electrical charge and an electrostatic charge.

Preferably, the collecting surface comprises a semi-penetrable material.

Conveniently, the collecting surface comprises a filter material.

Advantageously, the rotatable element is located in a tube constraining a flow of fluid, the axis of rotation of the arm being substantially parallel to the direction of fluid flow.

Preferably, the diameter of the tube is only marginally greater than the diameter prescribed by the rotatable element.

Conveniently, means are provided to collect released slurry, aggregate or agglomerate of particles from the collecting surface.

Another aspect of the present invention provides a method of collecting aerosol particles held in suspension in a fluid comprising the step of rotating a rotatable element within the aerosol suspension, the rotatable element comprising a collecting surface upon which aerosol particles impact.

Preferably, aerosol particles impacted on the collecting surface combine on the collecting surface to form a slurry, aggregate or agglomerate of aerosols, which are released from the collecting surface.

Advantageously, the slurry, aggregate or agglomerate of aerosol particles is released from the collecting surface by one or a combination of centrifugal force, vibratory force, ultrasonic radiation, heat and other forms of electromagnetic radiation.

Conveniently, the released slurry, aggregate or agglomerate of particles is subsequently collected.

Preferably, a portion of the fluid penetrates through the collecting surface.

In order that the present invention may be more readily understood, embodiments thereof will now be described, by way of example, with reference to the accompanying drawings in which:
Figure 1 is a schematic side view of an aerosol particle collection device embodying the present invention;
Figure 2 is a cross-section taken along line II-II of Figure 1 through a collection arm embodying the present invention and the airflow therearound, a bold arrow indicating the direction of rotation of the arm;
Figure 3 is a cross-section taken through a collection arm embodying the present invention and the airflow therearound, a bold arrow indicating the direction of rotation of the arm; and
Figure 4 is a schematic side view of a pair of aerosol particle collection devices embodying a further aspect of the present invention in combination with an exhaust tube, bold arrows indicating the direction of fluid flow through the exhaust tube.

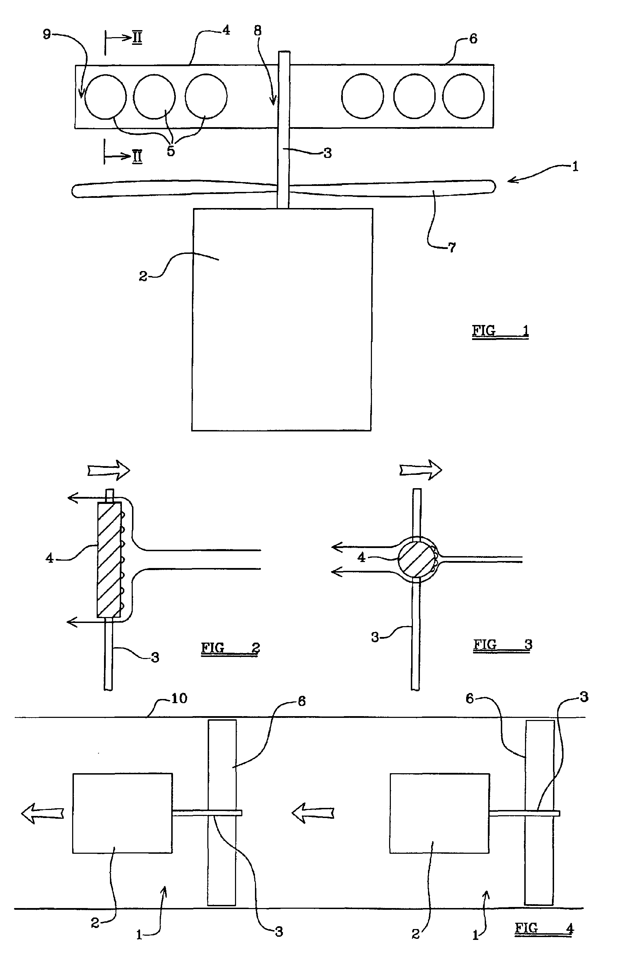

Referring now to Figure 1, an aerosol particle collection device 1 embodying the present invention comprises an electric motor 2 having a rotatable drive shaft 3. A rotatable element comprising a collection arm 4 is attached to the drive shaft 3. The collection arm 4 has an elongate planar surface substantially parallel to the axis of rotation of the drive shaft 3 as shown in Figure 2.

A number of removable sample collection films or foils 5 are applied along the length of the collection arm 4 which each act as a collecting surface for the arm 4. Alternatively, the films 5 can be dispensed with and the surface of the arm 4 itself is used as the collecting surface. Preferably, the collecting surface is provided with some means of retaining collected aerosols, such as being coated with a thin layer of grease.

The films 5 and greases which may be used, the sizes of the films, and the thicknesses of grease to be applied are well known to those working in this technical field and commonly used in cascade impactors and the like. Instead of, or in addition to, the films, foils or grease on the arm 4, the arm 4 can be electrically charged to promote the retention of aerosol particles which themselves carry a charge. The arm 4 can also be electrostatically charged.

The collection arm 4 is preferably counterbalanced about the drive shaft 3 by another arm 6 of similar construction or at least having the same weight distribution as the collection arm 4. The balancing arm 6 may optionally carry films 5. Preferably the arms 4,6 are manufactured as a composite structure, using carbon fibre or fibre glass.

The collection arm 4 prescribes a circular plane through the fluid containing the suspension of aerosol particles surrounding the aerosol particle deposition device 1. The collection arm 4 may present a simple planar surface (as in the case of the embodiment shown in Figures 1 and 2) to the direction of rotation or can, in other embodiments present other profiles to the direction of rotation, such as circular, triangular, concave and convex profiles. A collection arm 4 with a circular profile is shown in Figure 3. The collecting surface of the arm 4 can subtend any angle to the direction of rotation.

Preferably, the collection arm 4 is in the region of 15cm long although longer or shorter arms are possible. The arm 4 prescribes a 30cm diameter circle through the fluid. Rotational speeds in the order of 50 to 100 metres per second (tip speed) (i.e. approximately 3000 to 6000 rpm) are preferred although faster speeds are possible.

An auxiliary air mover comprising a fan 7 may be positioned at the base of the drive shaft 3 adjacent the electric motor 2 to promote fluid flow parallel to the drive shaft and past the rotating collection arm 4. When activated, the auxiliary air mover provides a fresh flow of air to the rotating collection arm 4 so that each sweep of the arm is through a fresh volume of air, i.e. fluid which has not previously been sampled. This can greatly increase the effective flow rate through the device from hundreds of litres per minute to tens of cubic metres per minute.

In operation, the collection arm 4 is rotated at a predetermined speed thereby creating an airflow around the arm 4 as shown in Figures 2 and 3. Particles having too great an inertia, i.e. larger aerodynamic diameter aerosol particles, to follow the air flow around the arm 4 impact on the collection surface of the arm whereas those aerosol particles with lower inertia, i.e. smaller aerodynamic diameter aerosol particles, are carried along with the fluid flow around the arm 4. Thus, only aerosol particles over a particular aerodynamic size (dictated by the relative speed of the airflow over the relevant portion of the arm) will impact and be deposited on the arm 4.

A particular advantage of utilising an arm which rotates around the drive shaft 3 is that the relative fluid flow rates around the arm vary from the root 8 of the arm 4 attached to the drive shaft 3 to the tip 9 of the arm 4 remote from the drive shaft 3. Toward the centre of rotation, the root 8 of the arm, the airflow speed is low so only larger aerosol particles (i.e. having a greater aerodynamic size) will be collected whereas towards the tip of the arm where airflow speeds are very much greater, smaller aerosol particles will be collected as well.

Because of the relatively high speed of the collection arm 4 through the fluid compared to any ambient fluid flow conditions around the collection device 1, the device is substantially insensitive to any ambient fluid flows such as changes in wind conditions. Typically, there would be an order of magnitude's difference between the speed of a portion of the arm 4 and any ambient fluid flow rates to ensure insensitivity. For instance, if the ambient wind speed is 10m/s, then this would be only 1/10th of the speed of the arm tip 9.

It will be appreciated that the rotational speed of the arm 4 can be varied so that the range of sizes of particles which can be collected by the collection arm can be tailored in order to sample aerosol particles of particular sizes, aerosol particles of different sizes being collected on the films spaced radially along the arm 4 from the root 8 to the tip 9.

In an important example of the present invention, the arm 4 is itself a semi-penetrable membrane or filter material thereby allowing impacted aerosol particles to be retained on or within the material of the arm 4.

Most of the above examples relate to aerosol particle samplers and more particularly to size selective aerosol particle samplers. Embodiments of the invention can also be used as aerosol particle collectors to filter out aerosol particles from fluid flows. Preferably, referring to Figure 4, in such embodiments the fluid flow to be filtered is constrained in an exhaust tube 10, flue or outlet having a diameter only slightly greater than that of the rotating arm 4. Such a filter or collector is particularly well suited to removing exhaust particles from industrial exhausts, incinerators and power station outflows. The air mover 7 is optional and indeed usually unnecessary in such embodiments, fluid flow through the exhaust being generated by positive pressure from the fluid source. A plurality of aerosol particle collectors embodying the present invention can be situated along the exhaust tube 10.

Diesel exhausts are notoriously difficult from which to filter out 0.2-0.3µm aerosol particles. However, when the exhaust is fed past a rotatable arm 4 embodying the present invention, these aerosol particles collect on the arm surface and form a slurry, aggregates or agglomerates of aerosols. The slurry or agglomerates have a particle size in the region of 2-5µm. Rotation of the arm 4 at high speed facilitates centrifugation of the slurry and/or agglomerates to the arm tip 9 and the formation of clumps of aerosols which are then easily collected by conventional techniques such as cyclonic collection. Accordingly, the arm serves to clean the fluid flow of normally difficult to filter aerosol particles.

In the present specification "comprise" means "includes or consists of and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An aerosol particle collection device for collecting aerosol particles suspended in a fluid, the device comprising: a rotatable element having a collecting surface which, during rotation of the element, passes through the fluid containing the aerosol suspension.

2. A device according to Claim 1, wherein the rotatable element has an axis of rotation such that a portion of the collecting surface remote from the axis of rotation has a higher relative velocity through the fluid than a portion of the collecting surface proximal the axis of rotation.

3. A device according to Claim 1 or 2, wherein two or more discrete collecting surfaces are provided along the rotatable element.

4. A device according to Claim 1 or 2, wherein a single collecting surface extends along the rotatable element.

5. A device according to any preceding claim, wherein the collecting surface is substantially normal to the direction of rotation of the rotatable element.

6. A device according to any one of Claims 1 to 4, wherein the collecting surface is substantially planar.

7. A device according to any one of Claims 1 to 5, wherein the collecting surface is substantially concave and/or convex in profile.

8. A device according to any preceding claim wherein a fluid mover is provided to direct a flow of fluid substantially parallel to the axis of rotation of the rotatable element such that the collecting surface moves through successive unsampled volumes of fluid.

9. A device according to Claim 8, wherein the fluid mover is a fan.

10. A device according to any preceding claim, wherein the speed of a portion of the rotatable element is selected to be substantially greater than any ambient fluid flow rate.

11. A device according to any preceding claim, wherein larger aerosol particles are collected remote from the axis of rotation and smaller particles are collected adjacentthe axis of rotation of the rotatable element thereby creating a size selective deposit along the rotatable element.

12. A device according to any preceding claim, wherein the collecting surface of the arm is provided with means to retain impacted particles.

13. A device according to Claim 12, wherein the retention means comprises one or a plurality of the following: a film, a foil, a layer of grease, an electrical charge and an electrostatic charge.

14. A device according to any preceding claim, wherein the collecting surface comprises a semi-penetrable material, particles being collected on or within the material.

15. A device according to Claim 14, wherein the collecting surface comprises a filter material.

16. A device according to any preceding claim, wherein the rotatable element is located in a tube constraining a flow of fluid, the axis of rotation of the arm being substantially parallel to the direction of fluid flow.

17. A device according to Claim 16, wherein the diameter of the tube is only marginally greater than the diameter prescribed by the rotatable element.

18. A device according to any preceding claim, wherein means are provided to collect released slurry, aggregate or agglomerate of particles from on or within the collecting surface.

19. A method of collecting aerosol particles held in suspension in a fluid comprising the step of rotating a rotatable element within the aerosol suspension, the rotatable element comprising a collecting surface upon or within which aerosol particles impact.

20. A method according to Claim 19, wherein aerosol particles impacted on the collecting surface combine on the collecting surface to form a slurry, aggregate or agglomerate of particles, which are released from the collecting surface.

21. A method according to Claim 20, wherein the slurry, aggregate or agglomerate of particles is released from the collecting surface by one or a combination of centrifugal force, vibratory force, ultrasonic radiation, heat and other forms of electromagnetic radiation.

22. A method according to Claim 20 or 21, wherein the released slurry, aggregate or agglomerate of aerosols is subsequently collected.

23. A method according to any one of Claims 19 to 22, wherein a portion of the fluid penetrates through the collecting surface.
